## Europäisches Patentamt
## European Patent Office
## Office européen des brevets

(19)

(11) Numéro de publication: **0 194 938**
**B1**

(12) **FASCICULE DE BREVET EUROPÉEN**

(45) Date de publication du fascicule du brevet:
27.04.88

(21) Numéro de dépôt: **86400501.2**

(22) Date de dépôt: **10.03.86**

(51) Int. Cl.⁴: **B 60 Q 1/38**

(54) Commutateur pour la commande combinée des feux indicateurs de direction et des feux de stationnement d'un véhicule automobile.

(30) Priorité: **12.03.85 FR 8503608**

(43) Date de publication de la demande:
**17.09.86 Bulletin 86/38**

(45) Mention de la délivrance du brevet:
**27.04.88 Bulletin 88/17**

(84) Etats contractants désignés:
**DE GB IT**

(56) Documents cité:
**DE-A-3 246 716**

(73) Titulaire: **JAEGER, 2, rue Baudin, F-92303 Levallois-Perret (FR)**

(72) Inventeur: **Regnault, Serge, 22, rue Milton, F-75009 Paris (FR)**
Inventeur: **Gauthier, Christian, 47, rue Descartes, F-75005 Paris (FR)**

(74) Mandataire: **Martin, Jean-Jacques, Cabinet REGIMBEAU 26, Avenue Kléber, F-75116 Paris (FR)**

EP 0 194 938 B1

## Description

La présente invention concerne un commutateur pour la commande combinée des feux indicateurs de direction et des feux de stationnement d'un véhicule automobile.

Ce commutateur est utilisable aussi bien dans le cas où ces feux (tels que définis par la directive 76/756/CEE) sont constitués par des sources lumineuses distinctes commandées sélectivement selon la position du commutateur, que dans celui où les feux sont "incorporés mutuellement", (au sens de la directive précités) c'est-à-dire qu'une source lumineuse unique fonctionne selon des régimes différents pour assurer l'une ou l'autre fonction.

La commande de la source lumineuse ou des sources lumineuses est assurée, de façon classique, par une centrale électrique ou électronique, extérieure à l'objet de l'invention: celle-ci se réfère uniquement au commutateur relié à cette centrale qui, par l'établissement de divers contacts électriques, va en déterminer le mode de fonctionnement.

Le type de commutateur auquel s'applique l'invention comporte un bras mobile, pivotant dans l'un ou l'autre sens par rapport à un boîtier fixe, depuis une position neutre, centrale, jusqu'à une première position stable, puis une seconde position, instable, en surcourse de la première position, ces positions étant telles que:

.   le passage de la position neutre à la première position provoque le passage de l'état neutre à un état de mise en service des feux indicateurs de direction,

.   le passage de la première à la seconde position provoque en outre l'armement d'un organe bistable, désarmé par le retour à la position neutre, l'état armé de l'organe bistable correspondant à un état de mise hors service des feux indicateurs de direction et de mise en service des feux de stationnement, après ouverture du circuit de contact d'allumage du véhicule,
ce commutateur comprenant

.   deux contacts de feux indicateurs de direction, sélectivement fermés par une extrémité du bras pivotant coopérant avec le contact respectif lorsque le bras se trouve à la première position,

.   deux contacts de feux de stationnement, sélectivement fermés par l'armément de l'organe bistable.

Le certificat d'utilité N° 78-17097 (publié sous le numéro FR-B-2 393 412) décrit un tel type de commutateur. Bien que le commutateur décrit donne entièrement satisfaction en ce qui concerne les différentes commutations effectuées, le fait que tous les contacts réalisés (tant pour les feux indicateurs de direction que pour les feux de stationnement) soient des contacts frottants a paru de nature à en limiter la durée de service, notamment pour des valeurs élevées d'intensité transitant par ces contacts.

L'un des buts de l'invention est de proposer un commutateur commandé suivant le mode de fonctionnement cité plus haut, dans lequel les différents contacts soient des contacts à établissement brusque au moment de la transition d'une position à l'autre, ces contacts étant ensuite soumis à une prèssion complémentaire lorsque le bras pivotant est maintenu à la position en question.

On réduit ainsi les effets de l'érosion par les étincelles qui peuvent survenir au moment de l'établissement du contact électrique, tout en maintenant par la suite une faible résistance de contact.

Ce résultat est principalement recherché pour les contacts de feux indicateurs de direction, mais il est souhaitable qu'il le soit également pour les contacts de feux de stationnement.

A cet effet, le commutateur de l'invention est caractérisé:

.   en ce que les contacts de feux de stationnement comprennent chacun un plot fixe d'amenée de courant et un plot fixe de contact, reliés par une barrette de contact mobile avec le bras pivotant,

.   en ce que cette barre est liée élastiquement au bras et montée flottante de manière à ménager un jeu en translation parallèlement au plan des plots et un jeu en basculement autour de l'axe du bras, cette barrette présentant deux prolongements latéraux en forme d'ailettes,

.   et en ce qu'il est prévu, pour chaque sens de déplacement, une bascule, liée élastiquement au boîtier, et comprenant une rampe coopérant avec l'ailette correspondante de la barrette de sorte que :

-   lors de la transition de la position neutre à la première position, l'ailette vienne en appui sur la face supérieure de la rampe en soulevant et basculant la barrette de manière à l'écarter du plot de contact correspondant,

-   lors de la transition de cette première position à la seconde position, l'ailette parvenue au sommet de la rampe quitte le contact avec la bascule en libérant la barrette de manière que celle-ci redescende et se redresse, pour venir en contact plan avec le plot de contact et le plot d'amenée de courant correspondant,

-   lors de la transition de cette seconde position à la première position, l'ailette vienne en appui sous la face inférieure de la rampe en soulevant la bascule, de manière que la liaison élastique entre bascule et boîtier vienne presser la barrette contre les plots.

De préférence, un élément unique forme bascule pour l'un et l'autre des sens de déplacement, la liaison élastique étant placée en position centrale et des proéminences symétriques du boîtier étant prévues pour former alternativement butée ou point d'appui dudit élément, selon le sens de basculement.

En complément des caractéristiques précédentes, il est souhaitable de prévoir des contacts de feux indicateurs de direction qui soient également des contacts avec pression et à établissement brusque. A cet effet:

. chacun des contacts de feux indicateurs de direction comprend un grain fixe d'amenée de courant et une lame de contact élastique précontrainte de manière à assurer un contact avec pression contre le grain en l'absence de toute sollicitation extérieure,

. le bras en position neutre sollicite de façon permanente la lame pour l'écarter du grain, tandis que le déplacement vers la première position provoque un relâchement de la lame propre à assurer une brusque mise en contact de celle-ci avec le grain.

D'autres caractéristiques et avantages de l'invention apparaîtront à la lecture de la description détaillée ci-dessous, faite en référence aux dessins annexés, sur lesquels:

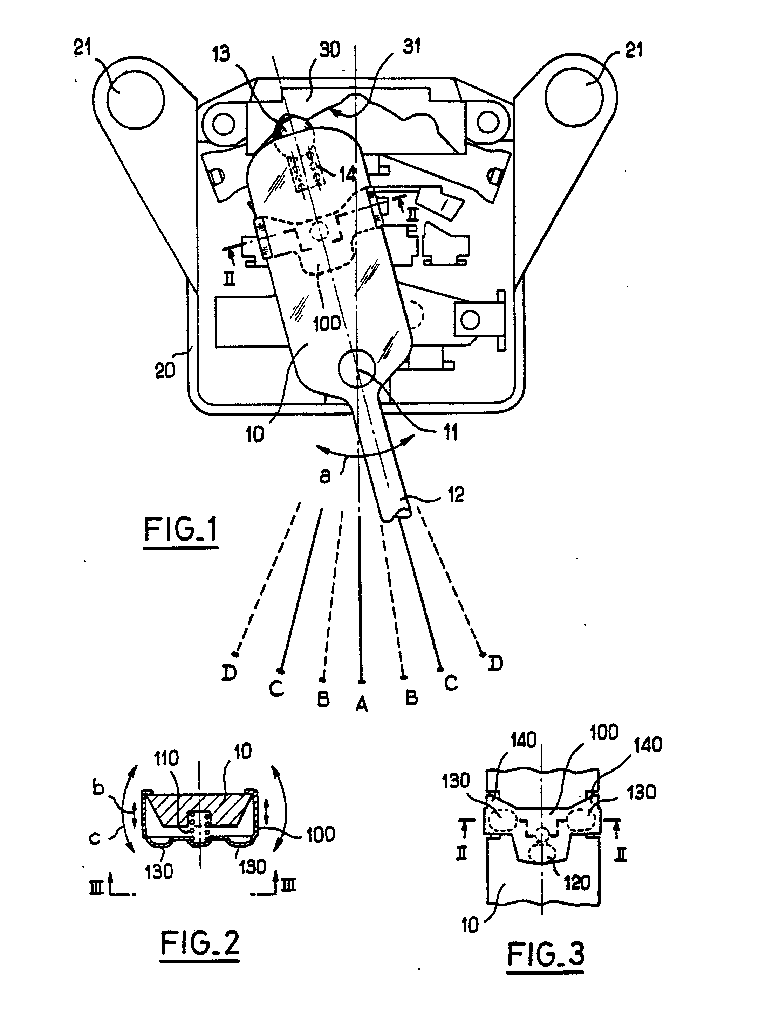

. la figure 1 est une vue d'ensemble, en plan, de l'ensemble boîtier-bras mobile de l'invention, montrant la disposition des différents éléments,

. la figure 2 est une coupe du bras mobile selon la ligne II-II des figures 1 ou 3,

. la figure 3 est une vue de dessous du bras mobile, selon la direction III-III de la figure 2,

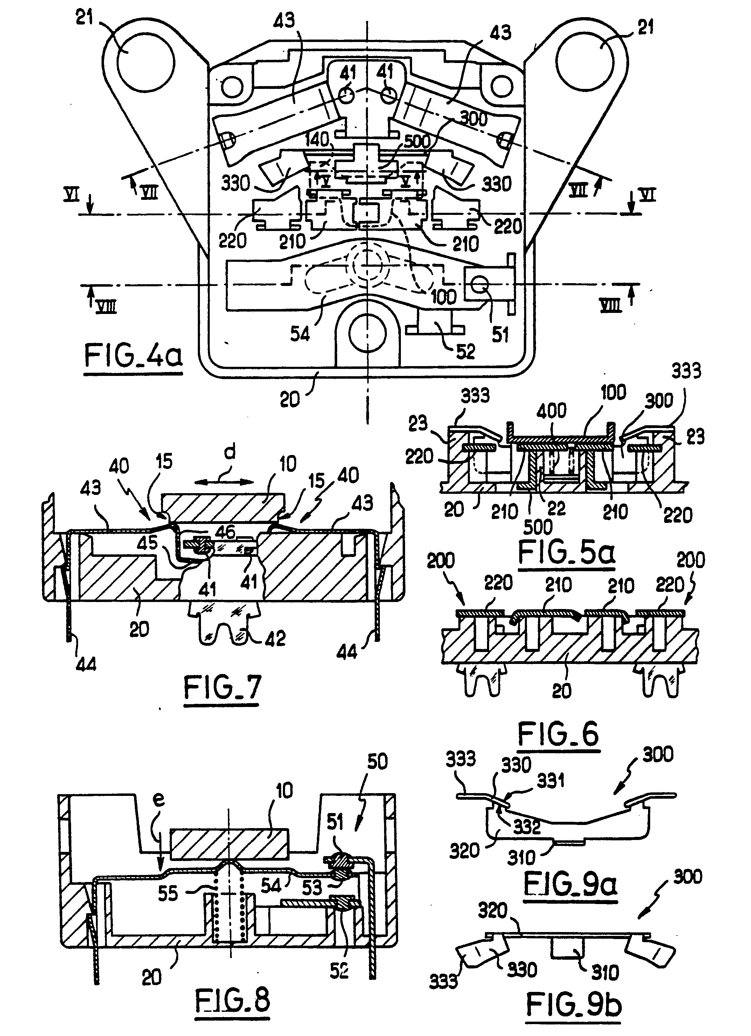

. la figure 4a est une vue homologue de la figure 1 , avec le bras mobile enlevé, la barette de contact étant en position neutre,

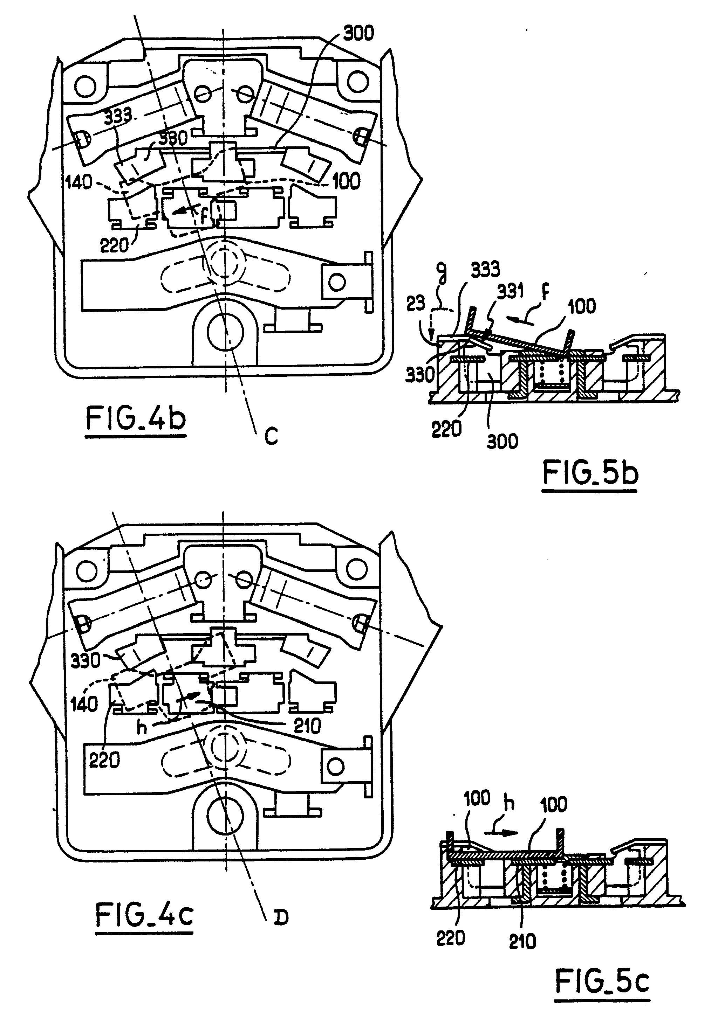

. la figure 5a est une coupe selon la ligne V-V de la figure 4a, la barrette de contact et les plots fixes ayant été représentés schématiquement,

. la figure 6 est une coupe selon la ligne VI-VI de la figure 4a, montrant les plots fixes de contact,

. la figure 7 est une coupe selon la ligne VII-VII de la figure 4a, montrant les contacts de feux indicateurs de direction,

. la figure 8 est une coupe selon la ligne VIII-VIII de la figure 4a, montrant les contacts de commande des projecteurs du véhicule,

. les figures 9a et 9b sont des vues, respectivement en élévation et en plan, de la bascule référencée 300 sur la figure 4a,

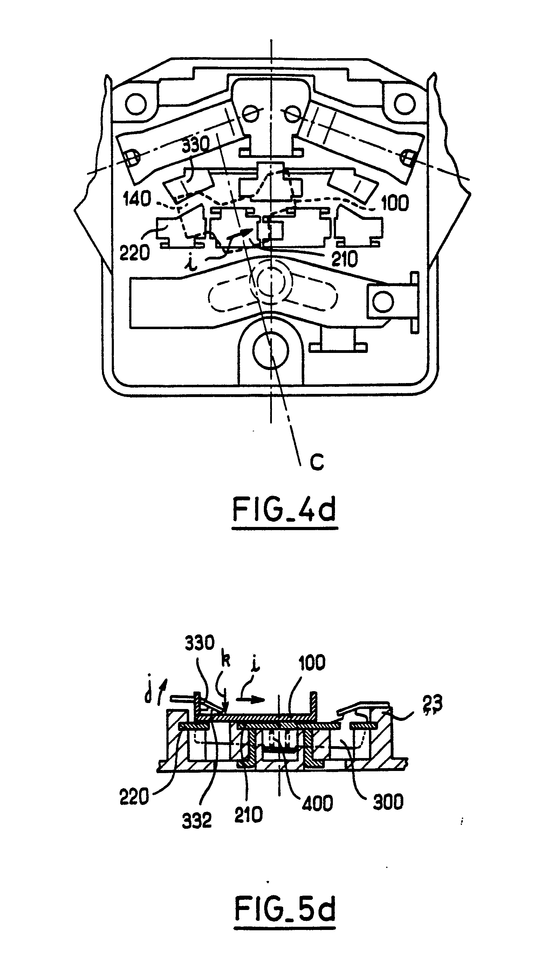

. les figures 4b et 5b, 4c et 5c et 4d et 5d sont homologues des figures 4a et 5a, pour les différentes positions successives du bras mobile du commutateur.

La figure 1 représente l'ensemble des éléments du commutateur en place, le couvercle du boîtier ayant été retiré: la référence 10 désigne un bras mobile par rapport à ce boîtier 20, pivotant autour d'un axe 11 par un levier mobile 12 accessible au conducteur. Généralement, le boîtier 20 est fixé à la colonne de direction au moyen des oreilles 21, de sorte que l'axe 11 (vu de bout sur la figure 1) soit sensiblement parallèle à l'axe de cette colonne. Le bras mobile est susceptible de prendre, sous la commande du conducteur, un certain nombre de positions autour d'une position neutre A, centrale et stable.

De part et d'autre de cette position A, on trouve successivement: une position instable B assurant la commande intermittente des feux indicateurs de direction (cette position intermédiaire peut cependant être omise), une position stable C correspondant à la commande permanente des feux indicateurs de direction, et une position instable D, en surcourse de la position C, correspondant à l'armement d'un organe bistable pour la commande des feux de stationnement (en pratique, les feux de stationnement ne seront mis en service qu'à l'arrêt du véhicule, c'est-à-dire après coupure du circuit d'allumage, de sorte que, lorsque le moteur est encore en fonctionnement, le passage à la position D et donc l'armement de l'organe bistable ne produise aucun changement du régime de fonctionnement des feux).

Les différentes positions, stables et instables. sont matérialisées au moyen d'une pièce 30, fixée au boîtier, comportant une rampe d'indexage 31 coopérant avec une bille ou galet rétractable 13 liée au bras mobile 10, et repoussée par un ressort 14. Ce dispositif, classique en lui-même, permet, grâce aux pentes variables des différents segments de la rampe d'indexage, de définir les positions stables et de déterminer les couples à appliquer au bras mobile pour passer de l'une à l'autre position.

Comme représenté notamment figures 2 et 3, le bras mobile supporte une barrette de contact 100 pourvue de bossages formant un plot central 120 et deux plots latéraux 130, tous ces plots étant situés dans un plan commun.

De façon caractéristique de l'invention, cette barrette de contact:

. est montée flottante sur le bras 10, de manière à ménager deux degrés de liberté: l'un en translation, parallèlement au plan des plots 120, 130, illustré par la flèche b; l'autre en pivotement autour de l'axe du bras, illustré par la flèche c. De la sorte, le plot 120 et le plot 130 de droite peuvent se soulever, le plot 130 de gauche restant sensiblement fixe et formant point d'appui, ou inversement.

. elle présente deux ailettes symétriques 140, situées sensiblement dans le plan des plots, et prolongeant la barrette au-delà de la région triangulaire délimitée par les trois plots 120 et 130.

Sur la figure 4a, le commutateur de la figure 1 a été représenté avec le bras mobile 10 et la rampe d'indexage 30 enlevés, de manière à laisser apparaître l'ensemble des organes électriques de contact ; seule la position de la barrette de contact 100 a été représentée en tireté, cette position sur la figure 4a correspondant à la position neutre A.

Les contacts 40 de feux indicateurs de direction, représentés figures 4a et 7, comprennent chacun un grain fixe de contact 41 relié à une borne commune 42 d'amenée de courant, et une lame flexible 43. L'une des extrémités 44 de cette lame sert de borne électrique pour le feu indicateur de direction correspondant; l'autre extrémité comporte une face 45 en regard du grain fixe 41, et une portion coudée, abrupte 46.

La lame 43 est précontrainte de sorte que, en l'absence de toute sollicitation extérieure, elle vienne en appui contre le grain 41 en exerçant une pression déterminée de contact sur celui-ci. Néanmoins, lorsque le commutateur est dans la position neutre, comme représenté figure 7, le bras 10 vient appuyer sur l'une et l'autre des lames 43 de manière à écarter celles-ci, de façon permanente, du grain 41 ; en revanche, lorsque le bras sera écarté de la position centrale dans l'un ou l'autre sens (positions B, C ou D, correspondant à la flèche d de la figure 7) le bord latéral 15 du bras va brusquement dépasser la partie abrupte 46 de la lame, libérant celle-ci.

L'établissement brusque du contact, et le contact avec préssion ainsi réalisés permettent notamment d'éviter les difficultés précédemment rencontrées avec les contacts frottants classiques.

De façon accessoire, le commutateur de l'invention peut également comprendre un contact 50 pour la commande des projecteurs du véhicule, par exemple les appels de phares ou la commutation feux de route-feux de croisement.

Ce contact 50 (figures 4a et 8) comporte deux grains fixes 51, 52 et un grain mobile 53 portés par une lame souple 54 coopérant avec un ressort 55. Une pression exercée sur le levier 10, perpendiculairement au plan de la figure 4a (c'est-à-dire dans le sens de la flèche e de la figure 8) provoquera, de façon tout à fait classique, l'établissement ou la fermeture des contacts correspondants.

On se réfèrera maintenant aux figures 4a et 6 pour la description des contacts de feux de stationnement: ces contacts 200 comprennent chacun un plot fixe 210 d'amenée de courant (ou bien un plot unique commun aux deux contacts), et un plot latéral 220, également fixe, d'amenée de courant. La fermeture du contact de feux de stationnement sera obtenue en court-circuitant les plots 210 et 220 correspondants, cette opération étant effectuée au moyen de la barrette de contact mobile 100, le bossage central 120 (fig. 3) de celle-ci venant au contact du plot 210, et le bossage latéral 130, avec le plot correspondant 220.

Le commutateur comprend enfin une bascule 300 (illustrée isolément figures 9a et 9b), caractéristique de l'invention: cette bascule, dont le rôle est purement mécanique, est symétrique et comporte une lame centrale 310 et deux bras latéraux 320 supportant chacun une rampe 330 dont on décrira par la suite le rôle des faces supérieure 331 et inférieure 332.

Cette bascule 300 est reliée (fig. 5a) au boîtier 20 au moyen d'un ressort 400 comprimé entre la lame centrale 310 et un étrier 500 solidaire du boîtier 20. Ce boîtier 20 comporte en outre un logement 22 et deux proéminences symétriques 23 formant butées, de sorte que le seul mouvement possible pour l'élément 300 est un mouvement de basculement, dans l'un ou l'autre sens, autour du point d'appui de l'extrémité de rampe 333 sur la butée 23.

On va maintenant décrire la manière dont sont établis les contacts de feux de stationnement, en référence aux différentes positions successives du bras mobile du commutateur.

Les figures 4a et 5a correspondent à la position neutre, dans laquelle aucun contact n'est établi (les plots fixes 210 d'amenée de courant et 220 de contact ont été représentés schématiquement sur la figure 5a, ainsi que la barrette 100). On remarquera (figure 4a) que dans cette position, les ailettes 140 de la barrette de contact 100 ne sont pas en contact avec les rampes 330 de la bascule 300.

Lors du passage à la position C (figures 4b et 5b), le déplacement de la barrette mobile 100 (flèche f) va amener en contact l'ailette 140 avec la face supérieure 331 de la rampe 330 de la bascule 300. De la sorte, par effet de rampe, l'ailette 140 va soulever la barrette 100 et l'écarter du plot de contact 220 (la bascule 300, quant à elle, reste immobile et en appui sur la butée 23, contre laquelle elle est sollicitée en appui par la liaison élastique du bras à la barrette).

On constate que cette position est parfaitement réversible, le retour de la position C à la position A ramenant les pièces à la configuration des figures 4a et 5a.

Si par contre l'on dépasse la position C, l'ailette 140, qui se trouvait au sommet 333 de la rampe pour la position C, va perdre le contact avec celle-ci et, sous l'effet de la liaison élastique bras-barrette, retomber dans un plan sensiblement horizontal (flèche g de la figure 5b).

La configuration sera alors celle représentée figures 4c et 5c (correspondant à la position D), avec la barrette 100 établissant désormais le contact entre les plots 210 et 220. Mais du fait que cette position D est une position instable, le bras va avoir tendance à retourner vers la position C, entraînant la barrette dans le sens indiqué par la flèche h, parallèlement au plan des plots et en restant en contact avec ceux-ci.

Dans sa course, l'ailette 140 va cependant revenir en contact (figures 4d et 5d) avec la rampe 330, mais désormais avec la face inférieure 332 de celle-ci, et non plus la face supérieure (sur la figure 4d, l'ailette 140 est au-dessous de la rampe 330, tandis que sur la figure 4c, elle se trouve au-dessus de cette dernière).

De la sorte, en poursuivant le déplacement (flèche i), et tout en restant en contact plan avec les plots 210 et 220, la barrette 100, par l'intermédiaire, de l'ailette 140, va venir soulever la bascule 300 (flèche j). Lorsque la position C est atteinte à nouveau, la barrette 100 est ainsi soumise à une préssion supplémentaire de contact (illustrée par la flèche k) résultant de la compression du ressort 400 et de la transmission de l'effort par la bascule 300 en appui sur la butée opposée 23. Cet effort supplémentaire permet d'accroître la pression de contact entre la barrette et les plots et ainsi de diminuer la résistance électrique du contact du feu de stationnement.

On constate ainsi que, bien que sur les figures 4b et 5b d'une part et 4d et 5d d'autre part, le bras de commande soit toujours à la même position C, la surcourse jusqu'à la position D (figures 4c et 5c) a modifié l'état du contact de feux indicateurs de direction, correspondant à l'état d'armement de l'organe bistable cité plus haut.

Cet organe bistable sera désarmé par retour à la position neutre A, où la configuration des éléments sera celle illustrée figures 4a et 5a, les contacts de feux de stationnement étant alors ouverts.

**Revendications**

1. Un commutateur pour la commande combinée des feux indicateurs de direction et des feux de stationnement d'un véhicule automobile au moyen d'un bras (10) mobile, pivotant dans l'un ou l'autre sens par rapport à un boîtier (20) fixe, depuis une position neutre (A), centrale, jusqu'à une première position (C) stable, puis une seconde position (D), instable, en surcourse de la première position, ces positions étant telles que:
- le passage de la position neutre à la première position provoque le passage de l'état neutre à un état de mise en service des feux indicateurs de direction,
- le passage de la première à la seconde position provoque en outre l'armement d'un organe bistable, désarmé par le retour à la position neutre, l'état armé de l'organe bistable correspondant à un état de mise hors service des feux indicateurs de direction et de mise en service des feux de stationnement, après ouverture du circuit de contact d'allumage du véhicule,
ce commutateur comprenant:
- deux contacts (40) de feux indicateurs de direction, sélectivement fermés par une extrémité du bras pivotant coopérant avec le contact respectif lorsque le bras se trouve à la première position,
- deux contacts (200) de feux de stationnement, sélectivement fermés par l'armement de l'organe bistable,
ce commutateur étant caractérisé:
- en ce que les contacts (200) de feux de stationnement comprennent chacun un plot fixe (210) d'amenée de courant et un plot fixe (220) de contact, reliés par une barrette de contact (100) mobile avec le bras pivotant (10),
- en ce que cette barrette (100) est liée élastiquement au bras (10) et montée flottante de manière à ménager un jeu en translation (b) parallèlement au plan des plots et un jeu en basculement (c) autour de l'axe du bras, cette barrette présentant deux prolongements latéraux en forme d'ailettes (140),

et en ce qu'il est prévu, pour chaque sens de déplacement, une bascule (300), liée élastiquement au boîtier, et comprenant une rampe (330) coopérant avec l'ailette correspondante de la barrette de sorte que:
- lors de la transition de la position neutre (A) à la première position (C), l'ailette vienne en appui sur la face supérieure (331) de la rampe en soulevant et basculant la barrette de manière à l'écarter du plot de contact correspondant,
- lors de la transition de cette première position (C) à la seconde position (D), l'ailette parvenue au sommet (333) de la rampe quitte le contact avec la bascule en libérant la barrette de manière que celle-ci redescende et se redresse, pour venir en contact plan avec le plot de contact et le plot d'amenée de courant correspondant,
- lors de la transition de cette seconde position (D) à la première position (C), l'ailette vienne en appui sous la face inférieure (332) de la rampe en soulevant la bascule, de manière que la liaison élastique (400) entre bascule et boîtier vienne presser la barrette contre les plots.

2. Un commutateur selon la revendication 1, dans lequel un élément unique (300) forme bascule pour l'un et l'autre des sens de déplacement, la liaison élastique (400) étant placée en position centrale et des proéminences symétriques (23) du boîtier étant prévues pour former alternativement butée ou point d'appui dudit élément, selon le sens de basculement.

3. Un commutateur selon l'une des revendicaétions précédentes, dans lequel:
- chacun des contacts (40) de feux indicateurs de direction comprend un grain fixe (41) d'amenée de courant et une lame de contact (43) élastique précontrainte de manière à assurer un contact avec pression contre le grain en l'absence de toute sollicitation extérieure,
- le bras en position neutre sollicite de façon permanente la lame pour l'écarter du grain, tandis que le déplacement vers la première position provoque un relâchement de la lame propre à assurer une brusque mise en contact de celle-ci avec le grain.

4. Un commutateur selon l'une des revendications précédentes, caractérisé en ce qu'il comprend en outre, entre lesdites position neutre (A) et première position stable (C) , une position instable (B) provoquant la mise en service intermittente des feux indicateurs de direction.

**Claims**

1. Commutator for the combined control of the direction indicator lights and parking lights of an automobile by means of a movable arm (10) which pivots in one or the other direction with respect to a fixed housing (20) from a central neutral position (A) to a first, stable position (C), then a second, unstable position (D), passing through the first position, these positions being such that:

- the passage from the neutral position to the first position causes the direction indicator lights to change from the neutral state to the operational state,
- the passage from the first to the second position also causes the setting of a bistable member, rest by the return to the neutral position, the set state of the bistable member corresponding to an inoperational state of the direction indicator lights and an operational state of the parking lights, after opening of the vehicle lighting contact circuit,

the said commutator comprising:
- two direction indicator light contacts (40) which are selectively closed by one end of the pivoting arm cooperating with the respective contact when the arm is located in the first position,
- two parking light contacts (200) which are selectively closed by the setting of the bistable member,

the said commutator being characterised in that:
- the parking light contacts (200) each include a fixed stud (210) for the current supply and a fixed contact stud (220) connected by a contact bar (100) which is movable with the pivoting arm (10),
- this bar (100) is flexibly connected to the arm (10) and mounted so as to be floating in such a way as to provide a clearance in translation (b) parallel to the plane of the studs and a clearance in tilting (c) about the axis of the arm, this bar having two lateral extensions in the form of fins (140),
- and for each direction of displacement a rocker (300) is provided which is flexibly connected to the housing and includes a ramp (330) cooperating with the corresponding fin of the bar in such a way that:
  - during the transition from the neutral position (A) to the first position (C) the fin comes to rest on the upper face (331) of the ramp, raising and tilting the bar so as to distance it from the corresponding contact stud,
  - during the transition from this first position (C) to the second position (D), the fin having reached the top (333) of the ramp ceases contact with the rocker, releasing the bar in such a way that the latter goes down again and rights itself in order to come into contact with the contact stud and the corresponding current supply stud,
  - during the transition from this second position (D) to the first position (C) the fin comes to rest below the lower face (332) of the ramp, raising the rocker, in such a way that the flexible connection (400) between the rocker and the housing comes to press the bar against the studs.

2. Commutator as claimed in claim 1, in which one single element (300) forms the rocker for one and the other direction of displacement, the flexible connection (400) being placed in a central position and symmetrical projections (23) from the housing being provided to form alternatively a stop or a support point for the said element, depending upon the direction of tilting.

3. Commutator as claimed in one of the preceding claims, in which:
- each of the direction indicator light contacts (40) includes a fixed current supply point (41) and an elastic prestressed contact strip (43) in such a way as to ensure a contact with pressure against the point in the absence of any external pull,
- the arm in the neutral position acts in a permanent fashion upon the strip in order to distance it from the point, whilst the displacement towards the first position causes a release of the strip so as to ensure a quick contact of the latter with the point.

4. Commutator as claimed in one of the preceding claims, characterised in that it also includes, between the said neutral position (A) and first stable position (C) an unstable position (B) which causes the intermittent operation of the direction indicator lights.

**Patentansprüche**

1. Schalter zum kombinierten Steuern von Fahrrichtungsblinker und Parklicht eines Kraftfahrzeuges mittels eines beweglichen Armes (10), welcher im Verhältnis zu einem festen Gehäuse (20) in die eine oder die andere Richtung schwenkbar ist, von einer neutralen, zentralen Position (A) bis zu einer stabilen ersten Position (C), dann zu einer zweiten, instabilen Position (D), wobei die erste Position überschritten wird, und diese Positionen so sind, daß:

die Passage von der neutralen Position zu der ersten Position die Passage des neutralen Zustands in einen Zustand der Inbetriebnahme der Fahrrichtungsblinker hervorruft,

die Passage von der ersten zu der zweiten Position ferner die Bewehrung eines bistabilen Teils hervorruft, dessen Bewehrung durch den Rückweg in die neutrale Position beseitigt wird, wobei der bewehrte Zustand des bistabilen Teils einem Zustand der Außerbetriebnahme der Fahrrichtungsblinker und der Inbetriebnahme der Parklichter, nach Öffnen des Kontaktkreises der Fahrzeugzündung, entspricht,

und der Schalter umfaßt:

zwei Kontakte (40) der Fahrrichtungsblinker, welche durch ein Ende des schwenkbaren Armes, der mit dem entsprechenden Kontakt zusammenwirkt wenn der Arm sich in der ersten Position befindet, selektiv geschlossen werden

zwei Kontakte (200) des Parklichts, die durch die Bewehrung des bistabilen Teils selektiv geschlossen werden,

und der Schalter dadurch gekennzeichnet ist, daß die Kontakte (200) des Parklichts jeder einen festen Anschluß (210) zur Stomversorgung und einen festen, mit dem schwenkbaren Arm (10) durch eine bewegliche Kontaktschiene (100) verbundenen Kontaktanschluß (220) umfassen,

daß diese Schiene (100) mit dem Arm (10) elastisch verbunden ist und schwebend montiert ist, so daß ein Translationsspiel (b) parallel zur Ebene der Anschlüsse und ein Kippspiel (c) um die Achse des Armes zustandekommt, wobei diese Schiene zwei seitliche Verlängerungen in Form von Flügeln (140) aufweist,

und daß für jede Verschiebungsrichtung eine Kippvorrichtung (300) vorgesehen ist, die mit dem Gehäuse elastisch verbunden ist, und eine Rampe (330) umfaßt, die mit dem entsprechenden Flügel der Schiene zusammenwirkt, so daß:

beim Übergang von der neutralen Position (A) in die erste Position (C) der Flügel auf der oberen Fläche (331) der Rampe zur Abstützung kommt, wobei die Schiene hochgehoben und gekippt wird, so daß sie vom entsprechenden Kontaktanschluß entfernt wird,

beim Übergang von dieser ersten Position (C) in die zweite Position (D) der zum höchsten Punkt (333) der Rampe gelangte Flügel den Kontakt mit der Kippvorrichtung verläßt, wobei die Schiene frei wird, so daß diese sinkt und sich wieder aufstellt, um mit dem Kontaktanschluß und dem entsprechenden Anschluß der Stromversorgung in ebenen Kontakt zu kommen,

bei Übergang von dieser zweiten Position (D) in die erste Position (C) der Flügel unter der unteren Fläche (332) der Rampe zur Abstützung kommt, wobei die Kippvorrichtung hochgehoben wird, so daß die elastische Verbindung (400) zwischen Kippvorrichtung und Gehäuse die Schiene gegen die Anschlüsse drücken kann.

2. Schalter nach Anspruch 1, in welchem ein einziges Element (300) die Kippvorrichtung für die eine oder die andere Verschiebungsrichtung bildet, wobei die elastische Verbindung (400) in zentraler Position angeordnet ist und symmetrische Gehäusevorsprünge (23) vorgesehen sind, um, gemäß der Kipprichtung, alternativ Anschlag oder Abstützpunkt des genannten Elementes zu bilden.

3. Schalter nach einem der vorhergehenden Ansprüche, in welchem:

jeder der Kontakte (40) des Fahrrichtungsblinkers ein festes Korn (41) zur Stromversorgung und eine elastische Kontaktplatte (43) umfaßt, die vorgespannt ist, um einen Kontakt mit Druck gegen das Korn in Abwesenheit jeder äußeren Belastung sicherzustellen,

der Arm in neutraler Position die Platte permanent belastet um sie vom Korn wegzuhalten, während die Verschiebung gegen die erste Position eine geeignete Freigabe der Platte hervorruft, um eine plötzliche Kontaktaufnahme dieser mit dem Korn sicherzustellen.

4. Schalter nach einem der vorhergehenden Ansprüche, dadurch gekennzeichnet, daß er ferner zwischen der genannten neutralen Position (A) und der ersten stabilen Position (C) eine instabile Position (B) umfaßt, um die intermittierende Inbetriebnahme der Fahrrichtungsblinker hervorzurufen.

FIG.1

FIG.2

FIG.3

FIG.4a

FIG.5a

FIG.6

FIG.7

FIG.8

FIG.9a

FIG.9b

FIG.4b

FIG.5b

FIG.4c

FIG.5c

**FIG_4d**

**FIG_5d**